# EUROPÄISCHE PATENTSCHRIFT

(11) **EP 0 773 253 B1**
(45) Veröffentlichungstag und Bekanntmachung des Hinweises auf die Patenterteilung: **17.03.1999**
(21) Anmeldenummer: 96115802.9
(22) Anmeldetag: 02.10.1996
(51) Int. Cl.: C08J 11/24

(54) **Verfahren zur Rückgewinnung von Sekundärpolyolen aus Lackschlämmen**
Process for recovering of secundary polyols from paint sludge
Procédé de récupération de polyols secondaires à partir de boues résiduaires de peinture

(30) Priorität: 09.11.1995 DE 19541780
(43) Veröffentlichungstag der Anmeldung: 14.05.1997
(73) Patentinhaber: DAIMLER-BENZ AKTIENGESELLSCHAFT, 70567 Stuttgart (DE)
(72) Erfinder: Kettemann, Bernd-Uwe, 89275 Elchingen (DE); Melchiorre, Michele, 89134 Blaustein (DE)

(56) Entgegenhaltungen:
- DE-A- 3 232 461
- DE-A- 4 433 834

## Beschreibung

Die Erfindung geht aus von einem Verfahren zur Rückgewinnung von Sekundärpolyolen aus Lackschlämmen nach dem Oberbegriff von Anspruch 1, wie es beispielsweise aus der EP 556 670 B1 als bekannt hervorgeht.

Bei der Sprühapplikation von Lacken wird ein nicht unerheblicher Anteil des Lackes - 30 bis 50 % des eingesetzten Lackes - ungewollt aber unvermeidlich am zu lackierenden Substrat vorbeigesprüht. Dieser sog. Overspray wird an den Wänden der Lackierkabine aufgefangen, abgeleitet und gesammelt. Üblicherweise wird der Overspray mittels eines an der Kabinenwand herabrinnenden Wasserfilmes aufgefangen und ausgetragen. Die Lackpartikel werden durch Zugabe eines Koagulierungsmittels, meist Tonerde o. dgl. koaguliert - u.U. wird zuvor auch noch ein Flockungsmittel zugegeben -, so daß aus den Lackpartikeln ein Lackschlamm entsteht. Diese Art der Sammlung des Oversprays ist bei allen Lacktypen, nämlich bei Wasserbasis-Lacken, z.B. Acrylatlacken, bei Lösemittel-Lacken, bei Einkomponenten- und bei Zweikomponenten-Lacken, letztere beispielsweise Polyurethanlacken möglich. Auch Epoxidlacke werden gelegentlich als 2-K-Lacke eingesetzt.

Der Lackschlamm wurde bisher meist und wird auch vielfach heute noch nach einer Entwässerung und u.U. einer Trocknung als Sondermüll entsorgt, was mit hohen Entsorgungskosten verbunden ist. Deshalb hat man nach Wegen zur Nutzung des Lackschlammes gesucht, um dadurch nicht nur die Entsorgung und die damit verbundenen Kosten zu vermeiden, sondern um darüber hinaus den in dem Lackschlamm enthaltenen Wertstoff sinnvoll als Rohstoff nutzen zu können.

In diesem Zusammenhang sei das Entwässern und Trocknen des Lackschlammes erwähnt, der in Granulatform als Kohlenstoffträger und Schlackebildner mit der Blasluft in einen Hochofen eingetragen wird (vgl. DE 43 28 157 A1). Gemäß der DE 29 35 103 C1 wird versucht, durch Zumischen von Verstärkungsfasern in den gut entwässerten Lackschlamm eine im Spritzgießverfahren zu Artikeln verarbeitbare Masse herzustellen. Eine gewissen Anreicherung des Lackes im Austragwasser ist auch mit den Methoden der Elektrophorese möglich (vgl. DE 43 20 566 A1), wobei der an einer Anodenwalze bzw. einem -band anhaftende Lack abgeschabt und in angereicherter Form vom Spritzkabinenwasser abgetrennt werden kann. Auch eine Aufkonzentration des Lackbindemittels im Spritzkabinenwasser mittels Ultrafiltration über eine Membrane ist sinnvoll einsetzbar.

Man hat auch schon das Harz bzw. den Binder des Lackes aus dem Lackschlamm extrahiert. Dabei wird der weitgehend entwässerte Lackschlamm mit einem Lösemittel vermischt und verdünnt, so daß die entstehende Flüssigkeit filtrierbar wird. Dadurch kann aus dem Lackkoagulat der lösliche Binder von dem Koagulierungsmittel getrennt werden. Der zurückgewonnene Binder kann zu neuen Lacken formuliert werden.

Die Rückgewinnung des Lackes aus Lackschlamm ist jedoch lediglich für Einkomponentenlacke möglich, bei denen das Harz bzw. der Binder des Lackes bei Raumtemperatur und in feuchter Umgebung relativ lange Zeit reaktionsfähig bleibt. Bei der Aufbereitung von Zweikomponenten-Systemen ist diese Verwertung nicht möglich, weil die beiden Komponenten in der Zeit des Sammelns und Entwässerns des Lackes miteinander reagieren und das Harz des Lackes zum Abbinden bringen, so daß es nicht mehr als reaktionsfähiger Rohstoff einsetzbar ist. Neben einer kostspieligen Entsorgung als Sondermüll können bisher Lackschlämme von Zweikomponentenlacken praktisch allenfalls hydriert, verbrannt oder im Hochofen entsorgt werden, wobei die tatsächlichen Werte des in relativ große Mengen anfallenden Wertstoffes weitgehend ungenutzt bleiben.

Zwar ist aus der EP 556670 B1 ein Verfahren zur Rückgewinnung des Binders aus Lackkoagulaten eines Zweikomponentenlackes auf Polyurthanbasis bekannt. Bei diesem Verfahren wird die Vernetzungsreaktion zwischen der Binderkomponente, dem Polyol und der Härterkomponente, nämlich dem Polyisocyanat, durch Zugabe eines Blockierungsmittels - eines Amins - unterbunden, d.h. es wird die Reaktionsfähigkeit der reaktiven Endgruppen des Härters blockiert, so daß das blockierte Polyisocyanat bei Raumtemperatur nicht mehr mit der Polyolkomponente reagiert. Das Verfahren läuft nach folgenden Schritten ab:
- Austragen des Koagulates aus dem Kabinenwasser,
- Vorentwässern des Lackschlammes mittel Zentrifuge, Dekanter o.dgl.,
- Blockieren der Reaktionsfähigkeit der Härter-Endgruppen durch Zugabe eines entsprechenden Blockierungsmittels und Verdünnen des Gemisches mittels eines Lösemittels,
- Abtrennen unlöslicher Koagulatbestandteile, z.B. der Koagulierungsmittel, der Pigmente u.a. mittels einer Filtration,
- Entfernen des Restwassers aus dem Filtrat, welches die Harzkomponente und die blockierte Härterkomponente enthält und
- Einstellen der gewünschten rheologischen Eigenschaften des Recyclats bei der Neuformulierung eines Lackes.
Leider hat die Praxis gezeigt, daß dieses Verfahren nur bei sehr kleinen Lackierkabinen mit kurzen Aufenthaltszeiten von einer oder höchstens zwei Stunden des Overspraylackes bzw. Lackkoagulates in den beiden ersten Verfahrensschritten vor der Zugabe des Blockierungsmittels funktioniert. Eine frühere Zugabe des Blockierungsmittels ist wegen der übelriechenden Eigenschaft des Blockierungsmittels und der damit ausgelösten, in der Intensität völlig unzumutbaren und anhaltenden Geruchsbelästigung beim Lakkieren unmöglich. Erst wenn das Lackkoagulat sich in einem völlig und permanent abgeschlossenen und/oder im Freien oder einem separaten Raum untergebrachten Anlagenteil befindet, von dem keine Gerüche an Arbeitsplätze dringen können, darf das Blockierungsmittel zugegeben werden. Bei größeren Lackieranlagen in industriellem Maßstab berechnen sich diese Aufenthaltszeiten des Lackkoagulates bis zum Abschluß der Vorentwässerung eher nach Tagen als nach Stunden. In solchen Lackieranlagen haben bis zum Abschluß der Vorentwässerung die beiden Komponenten des Lackschlammes eines 2-K-Lackes bereits vollständig miteinander reagiert. Das dann erst zugebbare Blockierungsmittel kann die abgeschlossene Reaktion nicht mehr rückgängig machen. Deshalb versagt das bekannte Rückgewinnungsverfahren bei größeren Lakkieranlagen. Ein weiterer Nachteil des bekannten Verfahrens besteht mittelbar darin, daß in dem Recyclat der blockierte Härter enthalten ist, wobei die blockierende Wirkung bei höheren Temperaturen, z.B. beim Einbrennen des Recyclatlackes verschwindet und die Härterwirkung wieder zur Geltung kommt. Dies muß bei der Neuformulierung des Recyclatlackes, sei es eines Ein- oder eines Zweikomponentenlackes, entsprechend berücksichtigt werden, was es bei der Produktion von Lacken praktisch verhindert, daß das Recyclat in eine Fertigung von Primärlacken einfließen kann.

DE 3 232 461 beschreibt ein Verfahren zum glycolytischen Hochtemperatur Abbau von Polyurethanschaumabfällen.

Ausgehend vom gattungsgemäß zugrundegelegten Stand der Technik ist es Aufgabe der Erfindung, ein Verfahren anzugeben, das universell zur Lackrückgewinnung aus Lackschlämmen bei Ein- und bei Zweikomponentenlacken, in Klein- und in Großlackieranlagen in der Weise eingesetzt werden kann, daß das Recyclat nach einer gewissen Additivierung auch für die Herstellung von Primärlacken jeglicher Art verwendbar ist.

Diese Aufgabe wird bei Zugrundelegung des gattungsgemäßen Verfahrens erfindungsgemäß durch die kennzeichnenden Merkmale von Anspruch 1 gelöst.

Danach werden die organischen Bestandteile des Lackkoagulates bei erhöhter Temparatur glykolytisch zu wiederverwendbaren Polyolen gespalten, aus denen Binderharze von neuen Lacken hergestellt werden können. Diese Polyolgewinnung ist bei Lackschlämmen aus allen Lacktypen möglich und die gewonnenen Polyole sind zu allen möglichen Arten von Neulacken weiterverarbeitbar.

Bei der Glykolyse wird vorzugsweise ein Gemisch verschiedener Glykole eingesetzt, und zwar in einer Menge von vorzugsweise etwa 20 bis 50 Gew.-% Lackkoagulates. Durch die Glykole wird das Lackkoagulat zugleich auch verdünnt. Das im Lackkoagulat enthaltene Wasser wird während der glygolytischen Spaltung aufgrund der Erwärmung verdampft und abgeführt. Die im Lackkoagulat enthaltene Begleitstoffe wie Farbpigmente, Koagulations- oder Flokkungsmittel können durch eine intensive Scherbeanspruchung des fließfähig verdünnten Lackkoagulates während der glykolytischen Spaltung zerkleinert und fein dispergiert werden. Alternativ können diese Bestandteile am Verfahrensende von den gebildeten Polyolen abgefiltert werden.

Um die für die Glykolyse der Lackschlämme erforderliche Erwärmung aufzubringen, wird außer extern zugeführter Heizenergie das Lackkoagulat zusätzlich auch durch interne Reibung aufgrund der intensiven Scherbeanspruchung in einem Scherreaktor erwärmt. Durch die Scherbeanspruchung können bedarfsweise Verunreinigungen im Lackschlamm wie Farbpigmente, Koagulierungs- oder Flokkungsmittel zerkleinert und dispergiert werden, so daß sie im späteren Lackrohprodukt nicht mehr störend wirken. Die Massetemperatur bei der glykolytischen Spaltung beträgt 150 bis 250°C, vorzugsweise 190 bis 200°C. Bei der Glykolyse der Lackschlämme wird vorzugsweise eine Glykolmischung verwendet, und zwar eine Mischung aus
- Diethylenglykol (DEG),
- Dipropylenglykol (DPG) und
- Butylenglykol (BG), vorzugsweise 1,3-Butylenglykol.

Die Menge der zugegebenen Glykolmischung entspricht 10 bis 100 Gew.-% der umzusetzenden Lackmenge. Die glykolytische Spaltung kann sowohl im Batchbetrieb als auch im kontinuierlichen Betrieb erfolgen. Vorzugsweise erfolgt der Abbau in einem Batchreaktor. Der Reaktor ist üblicherweise mit einem Rührwerk, einer Destillationseinheit, einer Eintragsstelle für den Lackschlamm und einer für das Glykol ausgestattet. Weiterhin besteht die Möglichkeit, einen Scherreaktor in den Verfahrensablauf zu integrieren.

Das aus PU-Lackschlämmen erhaltene Sekundärpolyol weist nach der vollständigen Glykolysereaktion folgende Analysendaten auf:

| | |
|---|---|
| OH-Zahl | 324 |
| Säurezahl | 4,3 |
| Viskosität (20°C) | 2500 mPa·s |

Zum Vergleich sei erwähnt, daß die OH-Zahl, d.h. die Anzahl der reaktiven Endgruppen an den Polyolen, die Härte des ausgehärteten Lackes bestimmt und bei üblichen Polyolen von Lacken im Bereich zwischen 150 und 400 liegt. Die Säurezahl gibt die Anzahl der freien Carbonsäuren an; sie sollte möglichst niedrig sein. Bei Lack-Polyolen liegen die Meßwerte der dynamischen Viskosität üblicherweise zwischen 1000 und 10000 mPa.s. Eine davon abweichende, gewünschte Verarbeitungs-Viskosität des Lackes wird üblicherweise durch Zugabe von Lösungsmittel eingestellt. Aus verschiedenen Gründen wird ein möglichst geringer Lösemittel-Einsatz angestrebt. Die erfindungsgemäß gewonnenen Sekundärpolyole lassen sich sowohl nach Abmischung mit Verarbeitungsadditiven allein, als auch im Verschnitt mit einem Primärpolyol zu einem Lackrohprodukt umsetzen.

Bei der erfindungsgemäßen glykolytischen Spaltung der Lackschlämme stört es nicht, wenn das Abfallprodukt mit Koagulierungs- und/oder Flocklungsmittel verunreinigt ist. Die Verunreinigungen werden entweder während der Glykolyse durch eine intensive Scherbeanspruchung fein dispergiert, so daß sie bei der späteren Lackverarbeitung nicht mehr stören oder sie werden nach der Glykolyse durch eine Fest/Flüssig-Trennung abgetrennt, z.B. abfiltriert, sofern die Sekundärpolyole zu einem hell getönten Lack oder zu einem Klarlack weiterverarbeitet werden sollen. Bei der Weiterverarbeitung zu einem schwarzen Lack, beispielsweise für die Lackierung von Achs- oder Motorteilen, oder zu einem dunkel getönten Lack, z.B. einem Füllerlack können die Verunreinigungen in den Polyolen verbleiben. Das feine Dispergieren der Verunreinigungen ist in diesem Fall zur Sicherstellung einer störungsfreien Verarbeitbarkeit des Recyclatlackes in Verarbeitungsanlagen mit feinen Ventilen, Dosierpumpen und Sprühorganen zweckmäßig.

Ein für das Zerkleinern und Feindispergieren der anorganischen Bestandteile wie Farbpigmente, Koagulierungs- oder Flockungsmittel geeigneter Scherreaktor könnte beispielsweise durch einen Scheibenrotor mit mehreren in definiertem Abstand achssenkrecht auf ihm aufgereihten, gelochten Kreisscheiben und einen Stator gebildet sein, der mit gelochten Statorscheiben versehen ist, die zwischen die Rotorscheiben bei geringem axialen Spiel (z.B. etwa 0,1 bis 0,5 mm) zwischen den Rotor- und den Statorscheiben eingreifen. Das Lackkoagulat wird bei geringer Strömungsgeschwindigkeit im wesentlichen axial durch den Scherreaktor hindurchgefördert, wobei der Rotor bei Drehgeschwindigkeiten von 5000 bis 20000 U/min. umläuft, was je nach Drehzahl und Durchmesser zu mittleren Umfangsgeschwindigkeiten von 30 bis 100 m/sec. führt. Aufgrund der inneren Reibung, die dabei in dem Lackschlamm erzeugt wird, werden nicht nur die Partikel zerkleinert und fein dispergiert, sondern der Lack erwärmt sich dabei auch um wenigstens 30 Grad.

Die Lackschlämme besitzen üblicherweise eine relativ hohe Restfeuchtigkeit (z.B. etwa 50 Gew.-%); andererseits darf dieses Wasser in den neuformulierten Lacken und somit auch in den zurückgewonnenen Polyolen nicht mehr enthalten sein. Mit dem erfindungsgemäβen Rückgewinnungsverfahren lassen sich auch wasserhaltige Gemische in der Weise aufbereiten, daß gleichwohl das zurückgewonnene Polyol ohne gesonderten Entwässerungsschritt weitgehend wasserfrei ist. Die Feuchtigkeit wird während der bei angehobenen Temperaturen stattfindenden Glykolyse selbsttätig abdestilliert.

Weitere zweckmäßige Ausgestaltungen der Erfindung können den Unteransprüchen entnommen werden. Im übrigen ist die Erfindung nachfolgend an Hand zweier Beispiele noch erläutert:

Das im Beispiel 1 verwendete Lackschlammkonzentrat stammt aus einer Lackierung von Flugzeugteilen. Der Abfall fällt als aufschwimmender Schlamm nach der Decklackverarbeitung an. Das Lackkonzentrat setzt sich aus folgenden Komponenten zusammen:
- Polyurethan: 71,4 Gew.-%
- Wasser: 20,5 Gew.-%
- Lösungsmittel: 2,5 Gew.-%
- Epoxyd: 5, 6 Gew.-%
Dieses Konzentrat von ausreagiertem Polyurethanlack wird in einen Rührreaktor eingetragen, in dem eine Glykolmischung vorgelegt ist, die aus Diethylenglykol und 1,3-Butylenglykol besteht, und unter ständigem Rühren bei einer Massetemperatur von 195°C. Bei der Verarbeitung wird darauf geachtet, daß die Temperatur im Reaktor nicht unter 190°C fällt. Bei diesem Verfahrensschritt der glykolytischen Spaltung wird die flüchtige Restfeuchte des Lackschlammes auf selbsttätige Weise destillativ abgetrennt und es entsteht ein Vorglykolysat. Das Mischungsverhältnis von Lackschlamm zur Glykolmischung richtet sich nach dem gewünschten Endprodukt des Rückgewinnungsverfahrens, welches wahlweise ein Lackrohprodukt für die Füllerverarbeitung oder z.B. für einen Strukturlack darstellen kann. Bei dem hier hergestellten Sekundärpolyol betrug das Mischungsverhältnis von Lackschlamm zu Glykol 80 zu 20 Gew-%. Das Vorglykolysat wird anschließend in einen Trennschritt von den nicht flüchtigen Anteilen (Epoxyde) durch eine Fest-Flüssig-Trennung (Filtration) befreit. Das aus dem Lackschlamm erhaltene Sekundärpolyol weist nach der vollständigen Glykolysereaktion und der Abtrennung der Verunreinigungen folgende Analysedaten auf:

| | |
|---|---|
| OH-Zahl | 237 |
| Säurezahl | 3,4 |
| Viskosität (20°C) | 980 mPa·s |

Die Sekundärpolyole lassen sich sowohl nach Abmischung mit Verarbeitungsadditiven allein, als auch im Verschnitt mit einem Primärpolyol umsetzen.

Das im Beispiel 2 verwendete Lackschlammkonzentrat stammt aus einer Lackierung von Automobilen. Der Abfall fällt als Schlammkoagulat bei der Verarbeitung eines Zweikomponenten-Klarlackes auf Polyurethanbasis an. Das Lackkonzentrat setzt sich aus folgenden Komponenten zusammen:
- Lackkoagulat: 41,9 Gew. -%
- Wasser: 55,0 Gew.-%
- Koaguliermittel: 3,1 Gew.-%
Die glykolytische Spaltung der Polyurethane und die Behandlung des Lackschlammes erfolgte hier völlig analog zu der im Zusammenhang mit Beispiel 1 genannten Vorgehensweise bzw. den entsprechenden Parametern. Das aus dem Lackschlamm erhaltene Sekundärpolyol weist nach der vollständigen Glykolysereaktion und der Abtrennung der Verunreinigungen folgende Analysedaten auf:

| | |
|---|---|
| OH-Zahl | 324 |
| Säurezahl | 4,3 |
| Viskosität (20°C) | 2500 mPa·s |

Auch diese Sekundärpolyole lassen sich sowohl nach Abmischung mit Verarbeitungsadditiven allein, als auch im Verschnitt mit einem Primärpolyol umsetzen.

## Patentansprüche

1. Verfahren zur Rückgewinnung des Lack-Bindemittels aus dem schlammartigen Lackkoagulat von Lacken, welches Lackkoagulat aus dem bei der Sprühapplikation des Lackes aufgefangenen und gesammelten Overspray durch Zugabe eines Koagulierungsmittels gebildet wird, bei welchem Verfahren das durch Massewirkung vorentwässerte Lackkoagulat chemisch behandelt und ein zumindest mittelbar bei der Lackherstellung wiederverwendbares Binder-Produkt erzeugt wird,
**dadurch gekennzeichnet,**
daß das Lackkoagulat auf über 100 °C erwärmt wird und seine organischen Bestandteile glykolytisch zu bei der Lackherstellung als Binder wiederverwendbaren Polyolen gespalten werden, wobei das im Lackkoagulat enthaltene Wasser während der glykolytischen Spaltung verdampft und abgeführt wird.

2. Verfahren nach Anspruch 1,
**dadurch gekennzeichnet,**
daß im Lackkoagulat enthaltene Begleitstoffe wie Farbpigmente, Koagulations- oder Flockungsmittel durch Scherbeanspruchung des fließfähig verdünnten Lackkoagulates zwischen eng beabstandeten, relativ zueinander bewegten Flächen zerkleinert und dispergiert werden.

3. Verfahren nach Anspruch 1,
**dadurch gekennzeichnet,**
daß die glykolytische Spaltung der organischen Bestandteile des Lackkoagulates bei einer Temperatur im Bereich zwischen 150 bis 250°C, vorzugsweise bei 190 bis 200°C erfolgt.

4. Verfahren nach Anspruch 1,
**dadurch gekennzeichnet,**
daß die glykolytische Spaltung der organischen Bestandteile des Lackkoagulates mittels eines Gemisches verschiedener Glykole durchgeführt wird.

5. Verfahren nach Anspruch 3,
**dadurch gekennzeichnet,**
daß das für die glykolytische Spaltung eingesetzte Glykolgemisch wenigstens zwei der folgenden Glykole enthält:
- Diethylenglykol (DEG),
- Dipropylenglykol (DPG) und
- Butylenglykol (BG), vorzugsweise 1,3-Butylenglykol.

6. Verfahren nach Anspruch 1,
**dadurch gekennzeichnet,**
daß die für die glykolytische Spaltung erforderlichen Glykole in einer Menge von 10 bis 100 Gew.-%, vorzugsweise etwa 20 bis 50 Gew.-% - bezogen auf das Rohgewicht des vorentwässerten Lackkoagulates - diesem zugegeben werden.

7. Verfahren nach Anspruch 6,
**dadurch gekennzeichnet,**
daß die Scherbeanspruchung des Lackkoagulates beim Zerkleinern und Dispergieren bei einer Relativgeschwindigkeit der Flächen von etwa 30 bis 100 m/s erfolgt.

8. Verfahren nach Anspruch 1,
**dadurch gekennzeichnet,**
daß nach der glykolytischen Spaltung der organischen Bestandteile des destillativ entwässerterten Lackkoagulates nicht-spaltbare Bestandteile wie Farbpigmente, Koagulations- oder Flockungsmittel von den gebildeten Polyolen abgefiltert werden.

## Claims

1. A process for the recovery of the paint binding agent in a sludge-like paint coagulate of paints, the paint coagulate being formed of the overspray caught and collected during the spray application of the paint with the addition of a coagulant, during which process the paint coagulate, predehydrated by means of mass effect, is chemically treated and a binding product which can be at least indirectly recycled in the manufacture of paint is produced,
**characterised in that,**
the paint coagulate is heated to over 100 °C and its organic components are separated by means of glycolysis to form polyhydric alcohols which can be recycled as binding agents in the manufacture of paint, whereby the water contained in the paint coagulate is evaporated and eliminated during the glycolytic separation process.

2. A process in accordance with Claim 1,
**characterised in that,**
escort substances contained in the paint coagulate such as colour pigments, coagulants and flocculents are comminuted and dispersed by means of the application of shearing stress to the paint coagulate which has been diluted to a free-flowing consistency between closely spaced surfaces which are moved in relation to one another.

3. A process in accordance with Claim 1,
**characterised in that,**
the glycolytic separation of the organic components of the paint coagulate takes place within a temperature range of between 150 and 250 °C, preferentially 190 to 200 °C.

4. A process in accordance with Claim 1,
**characterised in that,**
the glycolytic separation of the organic components of the paint coagulate is performed using a mixture of various glycols.

5. A process in accordance with Claim 3,
**characterised in that,**
the glycol mixture used for glycolytic separation contains at least two of the following glycols:
- di-ethylene glycol (DEG)
- di-propylene glycol (DPG) and
- butylene glycol (BG), preferentially 1.3-butylene glycol.

6. A process in accordance with Claim 1,
**characterised in that,**
the glycols required for glycolytic separation are added to the predehydrated paint coagulate in a quantity of 10 to 100 % by weight, preferentially approx. 20 to 50 % by weight in relation to the raw weight thereof.

7. A process in accordance with Claim 6,
**characterised in that,**
the shearing stress is applied to the paint coagulate during the comminution and dispersal stage at a relative surface speed of approx. 30 to 100 m/s.

8. A process in accordance with Claim 1,
**characterised in that,**
after the glycolytic separation of the organic components of the paint coagulate dehydrated by distillation, non-separable components such as colour pigments, coagulants and flocculents are separated from the polyhydric alcohols formed by means of filtration.

## Revendications

1. Procédé de récupération du liant de peintures à partir du produit de coagulation de la peinture sous forme de boue résiduaire de peinture, lequel produit de coagulation de peinture est formé de l'overspray recueilli et collecté lors de l'application de la peinture par pulvérisation au moyen de l'ajout d'un agent de coagulation, procédé au moyen duquel le produit de coagulation asséché au préalable par effet de masse est traité chimiquement et un produit liant réutilisable au moins indirectement pour la fabrication de peinture est fabriqué,
caractérisé en ce que,
on chauffe le produit de coagulation de peinture à plus de 100°C et on décompose ses constituants organiques par glycolyse en polyols réutilisables comme liants dans la fabrication de peinture, l'eau contenue dans le produit de coagulation de la peinture étant évaporée et extraite pendant la décomposition par glycolyse.

2. Procédé selon la revendication 1,
caractérisé en ce que,
les produits d'accompagnement contenus dans le produit de coagulation de peinture comme les pigments colorés, les agents de coagulation ou de floculation sont broyés et dispersés par sollicitation au cisaillement du produit de coagulation dilué de la peinture, capable de couler entre deux plans, placés à intervalle étroit, en mouvement relatif l'un par rapport à l'autre.

3. Procédé selon la revendication 1,
caractérisé en ce que,
la décomposition par glycolyse des constituants organiques du produit de coagulation de peinture est réalisée à une température dans l'intervalle entre 150 et 250°C, de préférence de 190 à 200°C.

4. Procédé selon la revendication 1,
caractérisé en ce que,
la décomposition par glycolyse des constituants organiques du produit de coagulation de peinture est réalisée au moyen d'un mélange de différents glycols.

5. Procédé selon la revendication 1,
caractérisé en ce que
le mélange de glycols utilisé pour la décomposition par glycolyse contient au moins deux des glycols suivants :
- diéthylèneglycol (DEG),
- dipropylèneglycol (DPG) et
- butylèneglycol (BG), de préférence le 1,3-butylèneglycol.

6. Procédé selon la revendication 1,
caractérisé en ce que
l'on ajoute au produit de coagulation de peinture préalablement asséché les glycols nécessaires à la décomposition par glycolyse, en une quantité de 10 à 100% en poids, de préférence d'environ 20 à 50% en poids - par rapport au poids brut de celui-ci.

7. Procédé selon la revendication 6,
caractérisé en ce que
la sollicitation au cisaillement du produit de coagulation de peinture est réalisée par broyage et dispersion à une vitesse relative des plans d'environ 30 à 100 m/s.

8. Procédé selon la revendication 1,
caractérisé en ce que,
après la décomposition par glycolyse des constituants organiques du produit de coagulation asséché par distillation, les constituants non décomposables comme les pigments colorés, les agents de coagulation ou de floculation sont séparés des polyols formés par filtration.
